# EUROPEAN PATENT APPLICATION

(11) **EP 3 182 263 A1**
(43) Date of publication of application: **21.06.2017**
(21) Application number: 15845647.5
(22) Date of filing: 31.07.2015
(51) Int. Cl.: G06F 3/0481, G06F 21/31

(54) **INFORMATION INTERACTION DISPLAY METHOD, INFORMATION INTERACTION DISPLAY DEVICE AND TERMINAL**

(30) Priority: 29.09.2014 CN 201410515795
(71) Applicant: Yulong Computer Telecommunication Scientific (Shenzhen) Co., Ltd., Shenzhen, Guangdong 518057 (CN)
(72) Inventor: JING, Xueying, Shenzhen Guangdong 518057 (CN)
(74) Representative: Johnson, Richard Alan
(86) International application number: PCT/CN2015/085887
(87) International publication number: WO 2016/050117

(57) **Abstract**

An information interaction display method, and information interaction display device and a terminal, the information interaction display method comprising: any other system sending a received information notification thereof to a current system (102), receiving in the current system a display command of a user for the information notification, and sending the display command to the any other system (104); and obtaining specific information content of the information notification in the any other system for purpose of display in the current system (106). With the technical solution mentioned above, the user can view the specific information content of other systems in the current system without switching among the systems and can process the specific information content in a simple way, thus facilitating operation of the user and improving user experience.

## Description

### CROSS REFERENCE TO RELATED APPLICATIONS

This application claims the priority based on Chinese patent application No.201410515795.X, filed on September 29, 2014, and entitled "INFORMATION INTERACTION DISPLAY METHOD, INFORMATION INTERACTION DISPLAY APPARATUS AND TERMINAL", which disclosure is herein incorporated by reference.

### TECHNICAL FIELD

The present disclosure relates to the field of terminal technology, and particularly to an information interaction display method, an information interaction display apparatus, and a terminal.

### BACKGROUND

Currently, a terminal can include multiple systems. If an information notification from another system is received in the terminal in the current system, the terminal has to switch to the other system to view the details of the information notification of the other system; system switching is required to perform again if the terminal wants to return to the previous system at the end of review. This scheme has great limitations, for example, whenever the user wants to view information from other systems or want to operate on the other systems, especially in the implementation of view information, delete information, reply, callback and other simple operations, the user must switch to other systems before proceeding the above operation and has to exit the other systems after the operation is finished. This causes great inconvenience to the user and reduces the operation efficiency.

Therefore, how to complete information interaction display among different systems in the terminal easily and quickly has become an urgent problem to be solved.

### SUMMARY

The present disclosure has been made in view of the above technical problems, and proposes a new technical solution, through which the user can view and process information of other systems without system switching.

In view of this, according to one aspect of the present disclosure, it is provided an information interaction display method for a terminal including a current system and at least one other system. The method includes: any other system sending a received information notification thereof to a current system; displaying in the current system the information notification and receiving from a user a display command for the information notification, and sending the display command to the any other system; and obtaining specific information content of the information notification in the any other system for displaying in the current system.

In this technical scheme, in the terminal including multiple systems, the information notification received in the other system can be displayed in the current system, for example, can be displayed in a locked screen, a drop-down menu, or an instant window of the current system. By clicking the information notification in the current system, a display command for displaying specific information content of the information notification of the other system in the current system can be sent to the other systems, therefore, the user can view the specific information content of the information notification of the other systems in the current system without system switching. Accordingly, operations of the user can be more convenient and user experience can be improved.

As one implementation, the method can further include: displaying the specific information content of the information notification in an instant window of the current system.

In this technical scheme, after the specific information content of the other system is received, the instant window for displaying the specific information content can be popped up in the current system. In this way, information interaction display among different systems can be realized, and the specific information content of the information notification of the other system can be displayed in the current system without system switching.

As one implementation, the method can further include: setting a predetermined password for the any other system; wherein before sending the display command to the any other system, the method can further include: receiving an access password entered by user; and sending the display command to the any other system if it is detected that the access password is consistent with the predetermined password.

In this technical scheme, an access password is preset for the system and the user is allowed to send the display command to the system only when the password entered by user is consistent with the preset access password of the system. If the password entered by user is inconsistent with the preset access password, it indicates that the user does not have access to the system and the display command of the user is denied to be transmitted to the system, such that the user cannot obtain the specific information content of the information notification. With aid of this technical scheme, the security of the system can be ensured and the privacy of the user can be protected.

Currently, setting the access password for the system can take many forms, for example, digital encryption, gesture encryption, fingerprint identification encryption and so on; on the other hand, when a wrong password is entered, there are a variety of fault tolerance mechanisms can be used, for example, prompt directly the user to re-enter the system access password, limit the number of times of error password entry, prohibit the user to access the system in a predetermined time period if error password entered reaches a preset number of times, and so on.

In the above technical scheme, as one implementation, after displaying the specific information content of the information notification in the instant window of the current system, the method can further include: receiving from the user an operation command for the specific information content and sending the operation command to the any other system.

In this technical scheme, in the instant window displaying the specific information content, simple interaction operation options such as reply, call back, close, forward, share, and so on can be provided for the user. By selecting an interaction operation option, a corresponding operation command of the selected interaction operation option can be transmitted to other systems corresponding to the specific information content so as to achieve simple interaction operation among different systems and improve the convenience of user operation. In the current system, the user can conduct interaction operation on the other system in a simple way without system switching, and therefore, the difficulty of operation is reduced.

In the above technical scheme, as one implementation, the method can further include: closing the instant window upon reception of the operation command; or, receiving from the any other system an execution result for the operation command and displaying the operation command in the instant window.

In this technical scheme, there can be different settings according to actual needs of the user; for example, it can be set to close directly the instant window after the operation command is sent by the current system to the other system and return to the previous operation interface, it can also be set to receive the execution result of the other system for the operation command after the operation command is sent to the other system by the current system and display the execution result in the instant window, whereby the user can know the execution result of the operation command.

According to another aspect of the present disclosure, it is provided an information interaction display apparatus for a terminal including a current system and at least one other system. The information interaction display apparatus includes: a sending unit, configured to be used by any other system to send a received information notification thereof to the current system; an interacting unit, configured to display in the current system the information notification, receive from a user a display command for the information notification, and send the display command to the any other system; an obtaining unit, configured to obtain specific information content of the information notification in the any other system for displaying in the current system.

In this technical scheme, in the terminal including multiple systems, the information notification received in the other system can be displayed in the current system, for example, can be displayed in a locked screen, a drop-down menu, or an instant window of the current system. By clicking the information notification in the current system, a display command for displaying specific information content of the information notification of the other system in the current system can be sent to the other systems, therefore, the user can view the specific information content of the information notification of the other systems in the current system without system switching. Accordingly, operations of the user can be more convenient and user experience can be improved.

In the above technical scheme, as one implementation, the apparatus can further include: a displaying unit, configured to display the information notification and the specific information content thereof in an instant window of the current system.

In this technical scheme, after the specific information content of the other system is received, the instant window for displaying the specific information content can be popped up in the current system. In this way, information interaction display among different systems can be realized, and the specific information content of the information notification of the other system can be displayed in the current system without system switching.

In the above technical scheme, as one implementation, the apparatus can further include: a setting unit, configured to set a predetermined password for the any other system; and the interacting unit is further configured to receive an access password entered by user; wherein the display command will be sent to the any other system if it is detected that the access password is consistent with the predetermined password.

In this technical scheme, an access password is preset for the system and the user is allowed to send the display command to the system only when the password entered by user is consistent with the preset access password of the system. If the password entered by user is inconsistent with the preset access password, it indicates that the user does not have access to the system and the display command of the user is denied to be transmitted to the system, such that the user cannot obtain the specific information content of the information notification. With aid of this technical scheme, the security of the system can be ensured and the privacy of the user can be protected.

In the above technical scheme, the interacting unit is further configured to: receive from the user an operation command for the specific information content and send the operation command to the any other system.

In this technical scheme, in the instant window displaying the specific information content, simple interaction operation options such as reply, call back, close, forward, share, and so on can be provided for the user. By selecting an interaction operation option, a corresponding operation command of the selected interaction operation option can be transmitted to other systems corresponding to the specific information content so as to achieve simple interaction operation among different systems and improve the convenience of user operation. In the current system, the user can conduct interaction operation on the other system in a simple way without system switching, and therefore, the difficulty of operation is reduced.

In the above technical scheme, as one implementation, the apparatus can further include: a closing unit, configured to close the instant window upon reception of the operation command; and the displaying unit is further configured to receive from the any other system an execution result for the operation command and display the operation command in the instant window.

In this technical scheme, there can be different settings according to actual needs of the user; for example, it can be set to close directly the instant window after the operation command is sent by the current system to the other system and return to the previous operation interface, it can also be set to receive the execution result of the other system for the operation command after the operation command is sent to the other system by the current system and display the execution result in the instant window, whereby the user can know the execution result of the operation command.

According to another aspect of the present disclosure, it is provided a terminal, including a communication bus, a transceiver device, a memory, and a processor.

Among which the communication bus is configured to achieve connection and communication among the transceiver device, the memory, and the processor.

The memory is configured to store a set of program code; the processor is configured to invoke the program code stored in the memory to perform the following operations.

The transceiver device is configured to be used by any other system to send a received information notification thereof to a current system.

The processor is configured to display in the current system the information notification, receive from a user a display command for the information notification, and send the display command to the any other system.

The transceiver device is further configured to obtain specific information content of the information notification in the any other system for displaying in the current system.

In the above technical scheme, as one implementation, the processor is further configured to set a predetermined password for the any other system; before sending the display command to the any other system, the processor is further configured to receive an access password entered by user and send the display command to the any other system if it is detected that the access password is consistent with the predetermined password.

In the above technical scheme, as one implementation, the processor is further configured to receive from the user an operation command for the specific information content and send the operation command to the any other system.

In the above technical scheme, as one implementation, the processor is further configured to close the instant window upon reception of the operation command, or, receive from the any other system an execution result for the operation command and display the operation command in the instant window.

Through the above technical schemes, the user can view, in the current system, the specific information content of other systems without system switching and can conduct simple operations on the specific information content, therefore, it is convenient for the user to operate and user experience can be improved.

### BRIEF DESCRIPTION OF THE DRAWINGS

FIG.1 is a schematic flow chart illustrating an information interaction display method according to an embodiment of the present disclosure.
FIG.2 is a schematic flow chart illustrating the information interaction display method according to an embodiment of the present disclosure.
FIG.3 is a schematic block diagram illustrating an information interaction display apparatus according to an embodiment of the present disclosure.
FIG.4 is a schematic block diagram illustrating a terminal according to an embodiment of the present disclosure.
FIG.5A-FIG.5D are diagrams illustrating an information interaction display example conducted by a terminal according to an embodiment of the present disclosure.
FIG.6 is a schematic block diagram illustrating another terminal according to an embodiment of the present disclosure.

### DETAILED DESCRIPTION OF ILLUSTRATED EMBODIMENTS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.

In the following description, numerous specific details are set forth in order to provide a thorough understanding of the present disclosure; however, the present disclosure may be embodied in other specific forms than those described herein. Thus, the scope of the present disclosure is not limited by the specific embodiments.

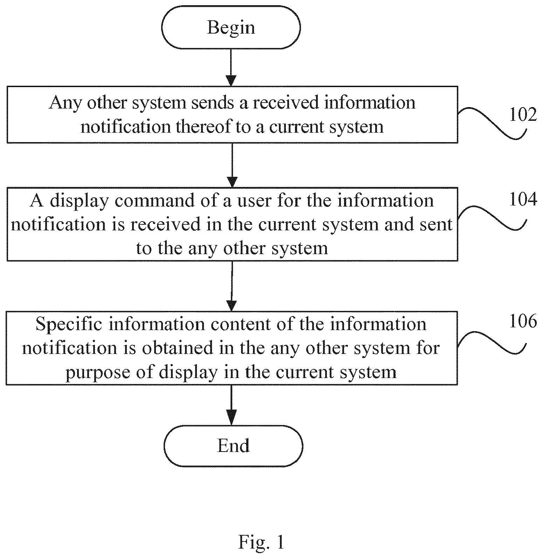

FIG.1 is a schematic flow chart illustrating an information interaction display method according to an embodiment of the present disclosure.

As illustrated in FIG.1, the information interaction display method according to the embodiment of the present disclosure includes the following steps.

S102, an information notification received by any other system is sent to a current system by the any other system.

S104, the information notification is displayed in the current system; a display command for the information notification is received from a user, and the display command is sent to the any other system.

S106, specific information content of the information notification is obtained in the any other system for displaying in the current system.

The information interaction display method according to the embodiment of the present disclosure is applicable to a terminal with multiple systems, among which the multiple systems includes the current system and at least one other system. When the information notification is received from the other system, it can be displayed in the current system, for example, can be displayed in a locked screen, a pull-down menu, or an instant window of the current system. By clicking the information notification in the current system, the display command can be sent to the other system, and the specific information content of the information notification of the other system can be displayed in the current system. Therefore, the user can view in the current system the specific information content of the information notification of the other system without system switching, and it is convenient for the user to operate and the user experience can be improved.

As an implementation, the method can further include the follows. The information notification and the specific information content thereof are displayed in the instant window of the current system.

In this technical scheme, after the specific information content is received from the other system, the instant window can be popped up in the current system, and the specific information content can be displayed in the instant window. In this way, information interaction display among different systems is achieved, and the specific information content of the information notification of the other system can be displayed in the current system without system switching.

As one implementation, the method can further include the follows. A predetermined password is set for the any other system. In this case, Step 104 can further include the follows. An access password is received from the user, and the display command is sent to the any other system if it is detected that the access password is consistent with the predetermined password.

In this technical scheme, an access password is set for a system. The user is allowed to send the display command to the system only if the password entered by the user matches the preset access password in the system. If the password entered by the user does not match the preset access password in the system, the user does not have access to the system, and it will be refused to send the display command of the user to the system so that the user cannot obtain the specific information content of the information notification. Through the technical scheme, the security of the system can be ensured, and the privacy of the user can be protected.

As one implementation, after the specific information content of the information notification is displayed in the instant window of the current system, the method further includes the follows. An operation command for the specific information content is received from the user and then sent to the any other system.

In this technical scheme, in the instant window displaying the specific information content, the user can be provided with simple interaction options, such as reply, call back, close, forward, share, etc. By selecting one interaction option, the user can transmit the operation command corresponding to the interaction option to the other system corresponding to the specific information content, so as to complete a simple interaction between different systems. In this way, the convenience of user operation can be improved; in the current system, the user can interact with other systems without system switching, and the difficulty of operation can be reduced.

As one implementation, the method can further include the follows. The instant window is closed after the operation command is received; or an execution result of the operation command is received from the any other system and is displayed in the instant window.

In this technical scheme, according to the needs of the user, it can be set to close the instant window directly and return a previous operation interface after the operation command is sent to the other system by the current system; it can also be set to receive from the other system the execution result of the operation command and display the execution result in the instant window after the operation command is sent to the other system by the current system, whereby the user can learn the execution result of the operation command in a timely manner.

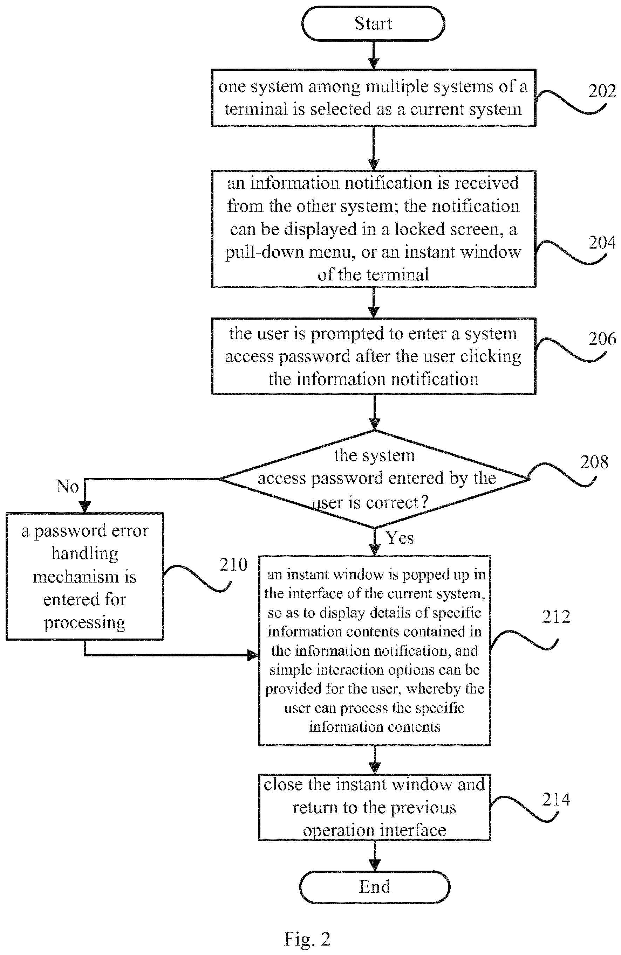

FIG.2 is a schematic flow chart illustrating the information interaction display method according to an embodiment of the present disclosure.

As shown in FIG.2, the information interaction display method according to the embodiment of the present disclosure includes the follows.

Step 202, one system among multiple systems of a terminal is selected as a current system. Among which the terminal includes the current system and at least one other system.

Step 204, an information notification is received from the other system; the notification can be displayed in a locked screen, a pull-down menu, or an instant window of the terminal.

Step 206, the user is prompted to enter a system access password after the user clicking the information notification.

Step 208, it is judged that whether the system access password entered by the user is correct; proceed to Step 212 is yes, and otherwise, proceed to Step 210.

Step 210, a password error handling mechanism is entered for processing; proceed to Step 212 until the password is entered correctly. A variety of fault-tolerant mechanisms are available in the related art, for example, prompt the user directly to re-enter the system access password, limit the number of times of error password entry, prohibit the user from accessing the system within a predetermined time if the error password entry reaches a preset number of times, etc.

Step 212, an instant window is popped up in the interface of the current system, so as to display details of specific information contents contained in the information notification, and simple interaction options can be provided for the user, whereby the user can process the specific information contents. The interaction options can include reply, call back, close, forward, share, and so on. Corresponding interaction buttons can be displayed distinguishably according to the application of information, and call back, delete, close, forward, share, and other simple interaction can be conducted.

Step 214, close the instant window and return to a previous user interface.

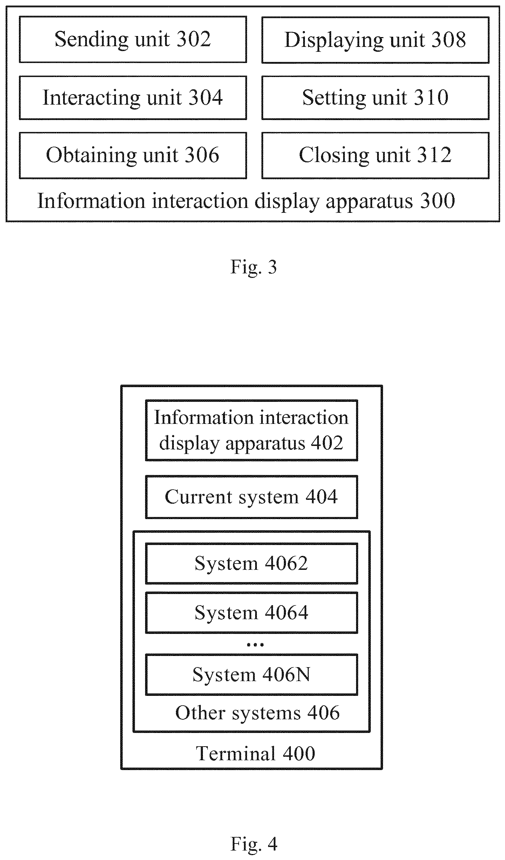

FIG. 3 is a schematic block diagram illustrating an information interaction display apparatus 300 according to an embodiment of the present disclosure.

As illustrated in FIG. 3, the information interaction display apparatus 300 includes: a sending unit 302, configured to be used by any other system to send a received information notification thereof to the current system; an interacting unit 304, configured to receive a display command for the information notification from a user, and transmit the display command to the any other system; an obtaining unit 306, configured to obtain specific information content of the information notification in the any other system for displaying in the current system.

In this technical scheme, in the terminal including multiple systems, the information notification received in the other system can be displayed in the current system, for example, can be displayed in a locked screen or a drop-down menu. By clicking the information notification in the current system, in the current system, a display command for displaying specific information content of the information notification of the other system can be sent to the other systems, therefore, the user can view in the current system the specific information content of the information notification of the other systems without system switching. Accordingly, operations of the user can be more convenient and user experience can be improved.

In the above technical scheme, as one implementation, the apparatus can further include: a displaying unit 308, configured to display the specific information content of the information notification in an instant window of the current system.

In this technical scheme, after the specific information content of the other system is received, the instant window for displaying the specific information content can be popped up in the current system. In this way, information interaction display among different systems can be realized, and the specific information content of the information notification of the other system can be displayed in the current system without system switching.

In the above technical scheme, as one implementation, the apparatus can further include: a setting unit 310, configured to set a predetermined password for the any other system; and the interacting unit 304 is further configured to receive an access password entered by user; wherein the display command will be sent to the any other system if it is detected that the access password is consistent with the predetermined password.

In this technical scheme, an access password is preset for the system and the user is allowed to send the display command to the system only when the password entered by user is consistent with the preset access password of the system. If the password entered by user is inconsistent with the preset access password, it indicates that the user does not have access to the system and the display command of the user is denied to be transmitted to the system, such that the user cannot obtain the specific information content of the information notification. With aid of this technical scheme, the security of the system can be ensured and the privacy of the user can be protected.

In the above technical scheme, the interacting unit 304 is further configured to: receive from the user an operation command for the specific information content and send the operation command to the any other system.

In this technical scheme, in the instant window displaying the specific information content, simple interaction operation options such as reply, call back, close, forward, share, and so on can be provided for the user. By selecting an interaction operation option, a corresponding operation command of the selected interaction operation option can be transmitted to other systems corresponding to the specific information content so as to achieve simple interaction operation among different systems and improve the convenience of user operation. The user can conduct interaction operation on the other system in the current system in a simple way without system switching, and therefore, the difficulty of operation is reduced.

In the above technical scheme, as one implementation, the apparatus can further include: a closing unit 312, configured to close the instant window upon reception of the operation command; and the displaying unit 308 is further configured to receive from the any other system an execution result for the operation command and display the operation command in the instant window.

In this technical scheme, there can be different settings according to actual needs of the user; for example, it can be set to close directly the instant window after the operation command is sent by the current system to the other system and return to the previous operation interface, it can also be set to receive the execution result of the other system for the operation command after the operation command is sent to the other system by the current system and display the execution result in the instant window, whereby the user can know the execution result of the operation command.

FIG. 4 is a schematic block diagram illustrating a terminal according to an embodiment of the present disclosure.

As illustrated in FIG. 4, a terminal 400 according to the embodiment of the present disclosure includes: an information interaction display apparatus 402 (which equivalents to the information interaction display apparatus 300), a current system 404, and other systems 406, among them, the other systems can include one or more systems, such as a system 4062, a system 4064, ...., a system 406N.

The information interaction display apparatus 402 can transmit an information notification received from any other system of the others systems to the current system 404, for example, the any other system is the system 4062; after receiving a display command for the information notification from a user, the information interaction display apparatus 402 can transmit the display command to the system 4062, and specific information content of the information notification will be obtained in the system 4062 and then displayed in the current system 404.

In this technical scheme, the terminal is provided with multiple systems, and when the information notification from another system is received in the current system, the display command can be sent to other systems in the current system, and the specific information content of the information notification of the other system can be displayed in the current system, therefore, the user can view in the current system the specific information content of the information notification of the other systems without system switching. Accordingly, operations of the user can be more convenient and user experience can be improved.

In addition, in order to protect the security of the system and the privacy of 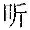 the user, the information interaction display apparatus 402 can preset an access password for the system, and the user is allowed to send the display command to the system only when the password entered by user is consistent with the preset access password of the system. If the password entered by user is inconsistent with the preset access password, it indicates that the user does not have access to the system and the display command of the user is denied to be transmitted to the system, such that the user cannot obtain the specific information content of the information notification, so as to ensure security of user privacy. In the related art, the access password can be set for the system in various ways, such as digital encryption, gesture encryption, and fingerprinting encryption.

The information interaction display apparatus 402 is further configured to receive an operation command for the specific information content from the user, and transmit the operation command to the system 4062. In this technical scheme, the information interaction display apparatus 402 can provide the user with simple interaction operation options, such as reply, call back, close, forward, share, and so on. By selecting an interaction operation option, a corresponding operation command of the selected interaction operation option can be transmitted to other systems corresponding to the specific information content so as to achieve simple interaction operation among different systems and improve the convenience of user operation. In the current system, the user can conduct interaction operation on the other system in a simple way without system switching, and therefore, the difficulty of operation is reduced.

In this technical scheme, there can be different settings according to actual needs of the user; for example, the information interaction display apparatus 402 can be set to close directly the instant window after the operation command is sent by the current system 404 to the system 4062 and return to the previous operation interface, the information interaction display apparatus 402 can also be set to receive the execution result of the system 4062 for the operation command after the operation command is sent to the system 4062 by the current system 404 and display the execution result in the instant window, whereby the user can know the execution result of the operation command.

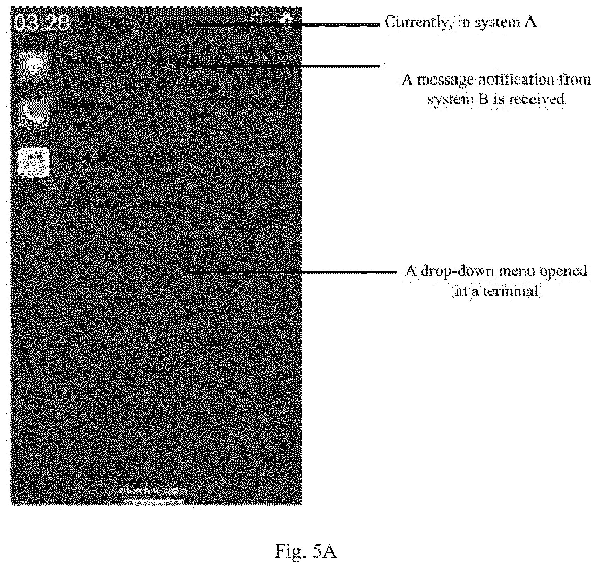

FIG. 5A-FIG. 5D are diagrams illustrating an information interaction display example conducted by a terminal according to an embodiment of the present disclosure.

As illustrated in FIG. 5A, the terminal has two systems, that is, system A and system B, and system A is the current system. When a message notification from system B is received, the message notification can be displayed in a drop-down menu of system A.

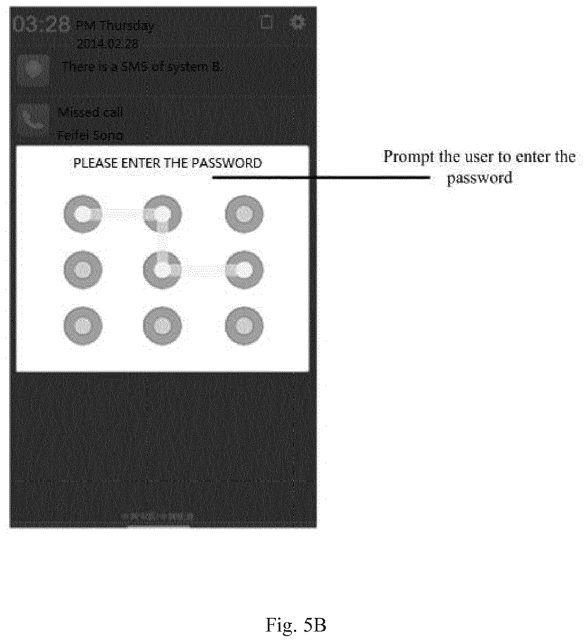

As illustrated in FIG. 5B, after the user clicks the message notification of system B in the drop-down menu, the terminal will prompt the user to enter the password.

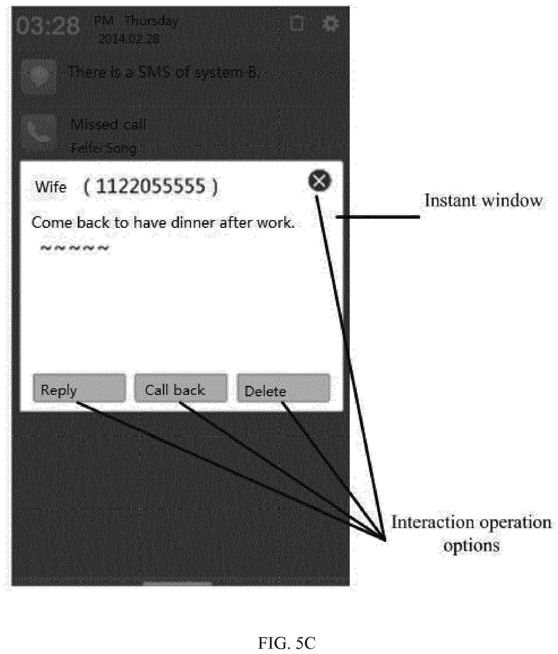

As illustrated in FIG. 5C, a display command is transmitted to system B while the user has inputted the correct password, whereby the specific information content of the information notification of system B can be displayed in an instant window of system A, that is, the information with the specific content of "Come back to have dinner after work" from user 11220555555 with the nickname of "Wife" will be displayed, and the user can view, in system A, the specific information content of the information notification of system B without switching to system B, therefore, it is convenient for the user to operate and the user experience can be improved. Besides, in the instant window of system A, simple interaction options are provided for the user, such as reply, call back, close, forward, share, and so on, whereby the user can conduct simple operations on the information.

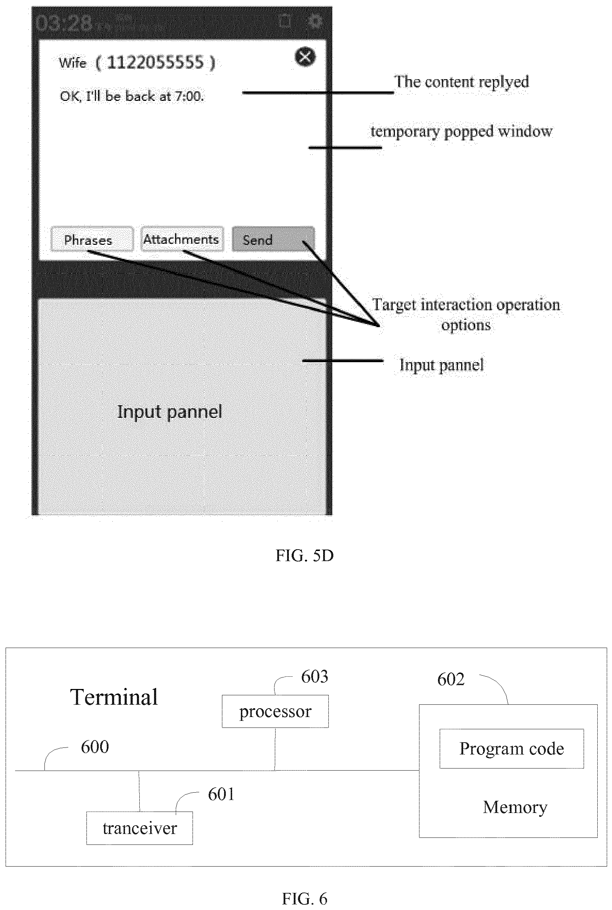

As shown in FIG. 5D, after the user selects the "reply" option, the terminal provide the user with an input panel for entering, and the user can enter "OK, I will be back at 7:00"; thereafter, the user can select the "phrase" option to add common phrases in the replied information, and can select the "attachment" option to share other files with user 1122055555; finally, the user can select the "send" option to instruct system B to send the reply content provided by the user to user 1122055555.

FIG.6 is a schematic block diagram illustrating another terminal according to an embodiment of the present disclosure.

As illustrated in FIG. 6, the terminal according to the embodiment of the present disclosure includes: a communication bus 600, a transceiver device 601, a memory602, and a processor 603 (there can be one or more processors 603 in the terminal, in FIG. 6, take one processor as an example).

The communication bus 600 is configured to achieve connection and communication among the transceiver device 601, the memory 602, and the processor 603.

The memory 602 is configured to store a set of program code; the processor 603 is configured to invoke the program code stored in the memory 602 to perform the following operations.

The transceiver device 601 is configured to be used by any other system to send a received information notification thereof to a current system.

The processor 603 is configured to display in the current system the information notification, receive from a user a display command for the information notification, and send the display command to the any other system.

The transceiver device 601 is further configured to obtain specific information content of the information notification in the any other system for displaying in the current system.

In this technical scheme, the processor 603 is further configured to set a predetermined password for the any other system; before sending the display command to the any other system, the processor 603 is further configured to receive an access password entered by user and send the display command to the any other system if it is detected that the access password is consistent with the predetermined password.

In this technical scheme, the processor 603 is further configured perform the follows: receiving from the user an operation command for the specific information content and sending the operation command to the any other system.

In this technical scheme, the processor 603 is further configured to perform the follows: closing the instant window upon reception of the operation command, or, receiving from the any other system an execution result for the operation command and displaying the operation command in the instant window.

Technical schemes of the present disclosure have been described with reference to the accompanying drawings. Through the technical schemes of the present disclosure, the user can view in the current system the specific information content of other systems without system switching, and conduct simple operations on the specific information content, therefore, it is convenient for the user to operate and user experience can be improved.

While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. An information interaction display method, wherein the method is applicable to a terminal comprising a current system and at least one other system, and the method comprises:
sending a received information notification to a current system by any other system;
displaying in the current system the information notification and receiving from a user a display command for the information notification, and sending the display command to the any other system; and
obtaining specific information content of the information notification in the any other system for displaying in the current system.

2. The information interaction display method of claim 1, further comprising:
displaying the specific information content of the information notification in an instant window of the current system.

3. The information interaction display method of claim 2, further comprising:
setting a predetermined password for the any other system;
wherein before sending the display command to the any other system, the method further comprises:
receiving an access password entered by the user; and
sending the display command to the any other system if it is detected that the access password is consistent with the predetermined password.

4. The information interaction display method of any of claims 1-3, wherein after displaying the specific information content of the information notification in the instant window of the current system, the method further comprises:
receiving from the user an operation command for the specific information content and sending the operation command to the any other system.

5. The information interaction display method of claim 4, further comprising:
closing the instant window upon reception of the operation command; or
receiving from the any other system an execution result for the operation command and displaying the operation command in the instant window.

6. An information interaction display apparatus, wherein the apparatus is applicable to a terminal comprising a current system and at least one other system, and the apparatus comprises:
a sending unit, configured to be used by any other system to send a received information notification thereof to the current system;
an interacting unit, configured to display in the current system the information notification, receive from a user a display command for the information notification, and send the display command to the any other system; and
an obtaining unit, configured to obtain specific information content of the information notification in the any other system for displaying in the current system.

7. The information interaction display apparatus of claim 6, further comprising:
a setting unit, configured to set a predetermined password for the any other system; and
the interacting unit is further configured to receive an access password entered by the user; wherein the display command will be sent to the any other system if it is detected that the access password is consistent with the predetermined password.

8. The information interaction display apparatus of any of claims 6-7, wherein the interacting unit is further configured to:
receive from the user an operation command for the specific information content and send the operation command to the any other system.

9. The information interaction display apparatus of claim 8, further comprising:
a closing unit, configured to close the instant window upon reception of the operation command; and
the displaying unit is further configured to receive from the any other system an execution result for the operation command and display the operation command in the instant window.

10. A terminal, comprising a communication bus, a transceiver device, a memory, and a processor, wherein
the communication bus is configured to achieve connection and communication among the transceiver device, the memory, and the processor;
the memory is configured to store a set of program code;
the processor is configured to invoke the program code stored in the memory to perform the following operations:
the transceiver device is configured to be used by any other system to send a received information notification thereof to a current system;
the processor is configured to display in the current system the information notification, receive a display command of a user for the information notification, and send the display command to the any other system; and
the transceiver device is further configured to obtain specific information content of the information notification in the any other system for displaying in the current system.

11. The terminal of claim 10, wherein the processor is further configured to perform the following steps:
setting a predetermined password for the any other system; and
before sending the display command to the any other system, the processor is further configured to perform the following steps:
receiving an access password entered by the user; and
sending the display command to the any other system if it is detected that the access password is consistent with the predetermined password.

12. The terminal of any of claims 10-11, wherein the processor is further configured to perform the following steps:
receiving from the user an operation command for the specific information content and sending the operation command to the any other system.

13. The terminal of claim 12, wherein the processor is further configured to perform the following steps:
closing the instant window upon reception of the operation command; or
receiving from the any other system an execution result for the operation command and display the operation command in the instant window.
